# EUROPÄISCHE PATENTSCHRIFT

(11) **EP 2 219 818 B1**
(45) Veröffentlichungstag und Bekanntmachung des Hinweises auf die Patenterteilung: **22.05.2013**
(21) Anmeldenummer: 08849831.6
(22) Anmeldetag: 10.11.2008
(51) Int. Cl.: B23K 26/14

(54) **MEHRACHSBEARBEITUNGSMASCHINE UND ELASTIZITÄTS-STEUERUNGS-VERFAHREN**
MULTI-AXIS MACHINING CENTER AND ELASTICITY CONTROL METHOD
MACHINE DE TRAITEMENT MULTIAXE ET PROCÉDÉ DE COMMANDE À ÉLASTICITÉ

(30) Priorität: 12.11.2007 DE 102007053737
(43) Veröffentlichungstag der Anmeldung: 25.08.2010
(73) Patentinhaber: Sauer GmbH Lasertec, 87437 Kempten (DE)
(72) Erfinder: VOGT, Christian, 87463 Dietmannsried (DE); KARGUS, Waldemar, 87459 Pfronten (DE); REISACHER, Martin, 87435 Kempten (DE)
(74) Vertreter: Beetz & Partner
(86) Internationale Anmeldenummer: PCT/EP2008/009464
(87) Internationale Veröffentlichungsnummer: WO 2009/062647

(56) Entgegenhaltungen:
- WO-A-2007/036797
- US-A1- 2006 153 668
- US-B1- 6 797 917
- "CONTROLLED/BUFFERED DOWNPRESSURE TOOL HOLDER" IBM TECHNICAL DISCLOSURE BULLETIN, IBM CORP. NEW YORK, US, Bd. 34, Nr. 2, 1. Juli 1991 (1991-07-01), Seiten 96-97, XP000210583 ISSN: 0018-8689

## Beschreibung

Die Erfindung betrifft eine Mehrachsbearbeitungsmaschine und ein Elastizitäts-SteuerungsVerfahren nach den Oberbegriffen der unabhängigen Patentansprüche 1 und 12.

Verbindungsstücke werden verwendet, um im Falle von Kollisionen zwischen dem Werkzeug der Maschine und anderen Maschinenteilen oder dem Werkstück Elastizität im System zu haben, so dass Beschädigungen aufgrund starrer Komponenten vermieden werden. "Elastizität" in diesem Zusammenhang bedeutet nicht notwendigerweise eine lineare Elastizität ähnlich einer Federkonstante. Vielmehr soll damit allgemein eine Nachgiebigkeit unter definierten Bedingungen angesprochen sein.

Ein bekanntes Verbindungsstück weist ein maschinenseitiges Auflager, einen werkzeugseitigen Halter und eine Spannvorrichtung auf, die den Halter elastisch in eine definierte Position gegen das Auflager drückt. Die Spannvorrichtung weist mehrere Druck- oder Zugfedern auf, die in ihrer Spannung eingestellt werden können, indem manuell die Federvorspannungen eingestellt werden.

Nachteilig an den bekannten Verbindunsstücken ist es, dass die durch sie gegebene Systemelastizität nur umständlich bzw. im Betrieb praktisch nicht geändert werden kann. So können bspw. Werkzeugköpfe unterschiedlich schwer sein, so dass sie auch bei gleicher Beschleunigung unterschiedliche Trägheitskräfte zeigen. Dies macht auch unterschiedliche Spannkräfte notwendig, was nur durch manuellen Eingriff erreicht werden kann. Auch kann es wünschenswert sein, die Spannkräfte in Abhängigkeit vom Arbeitsmodus einzustellen. So können beispielsweise beim Programmieren einer Maschine Kollisionen wahrscheinlicher als beim anschließenden Betrieb auftreten, so dass beim Programmieren eine geringere Systemsteifigkeit als beim anschließenden Arbeiten wünschenswert sein kann. Ebenso kann es wünschenswert sein, die Steifigkeit in Abhängigkeit von der Verstellgeschwindigkeit oder der Beschleunigung eines Arbeitskopfs bzw. Werkzeugs einzustellen. Auch die Lage des Werkzeugs kann unterschiedliche Momente und Kräfte und dementsprechend unterschiedliche Bedingungen im Hinblick auf das Ansprechen des Verbindungsstückes bewirken.

Die US2006/0153668 beschreibt eine Schnittstelle mit einstellbarer Freigabekraft. Hierzu sind Kollisionsschutzelement 21a, b vorgesehen, die auch eingestellt werden können. US 2006/0153668 offenbart eine Mehraschsbearbeitungsmachine mit den Merkmalen des Oberbegriffs des Anspruchs 1 und ein Verfahren mit den Merkmalen des Oberbegriffs des Anspruchs 12.

Das "IBM Technical Disclosure Bulletin" beschreibt in Vol. 34 No. 2, Juli 1991, ab S. 96 einen Werkzeughalter, bei dem die abwärts gerichtete Kraft eines Werkzeugs einstellbarer ist.

Die US6797917 beschreibt einen Laserbearbeitungskopf, bei dem ein mit einem Flansch versehenes Rohr ausrückfähig in einem Käfig gehalten wird.

Aufgabe der Erfindung ist es, eine Mehrachsbearbeitungsmaschine mit einem Verbindungsstück und ein Elastizitäts- Steuerungs- Verfahren anzugeben, die eine schnelle und automatisierte Anpassung der Elastizität im Verbindungsstück erlauben.

Diese Aufgabe wird mit den Merkmalen der unabhängigen Patentansprüche gelöst. Abhängige Patentansprüche sind auf bevorzugte Ausführungsformen der Erfindung gerichtet.

Nachfolgend werden Bezug nehmend auf die Zeichnungen einzelne Ausführungsformen der Erfindung beschrieben, es zeigen:
- Fig. 1: den Schnitt durch und eine schematische Draufsicht auf ein Verbindungsstück, und
- Fig. 2: eine Mehrachsbearbeitungsmaschine mit einem Verbindungsstück.

In den Figuren bedeuten allgemein gleiche Bezugsziffern gleiche Komponenten. Merkmale sollen auch dann miteinander kombinierbar sein betrachtet werden, wenn dies nicht ausdrücklich gesagt ist, soweit sich eine Kombination der Merkmale nicht aus technischen Gründen ausschließt.

In den Figuren bedeuten 1 ein Verbindungsstück, 2 eine Werkzeugmaschine, 3 ein Werkzeug, etwa einen Laserkopf, 4 ein Werkstücktisch, 5 einen Maschinenrahmen, 6, 7 und 8 Aktoren zur translatorischen und rotatorischen relativen Verstellung von Werkstück und Werkzeugkopf gegeneinander, 9 das Werkstück, 10 eine Drückvorrichtung, 11 ein maschinenseitiges Auflager, 12 einen werkzeugseitigen Halter, 13 eine Spannvorrichtung, 14 eine Laserstrahldurchführung, 15 eine Positioniereinrichtung, 16 einen Kraftübertragungsbereich, 18 einen Ausrücksensor und 19 eine Achse.

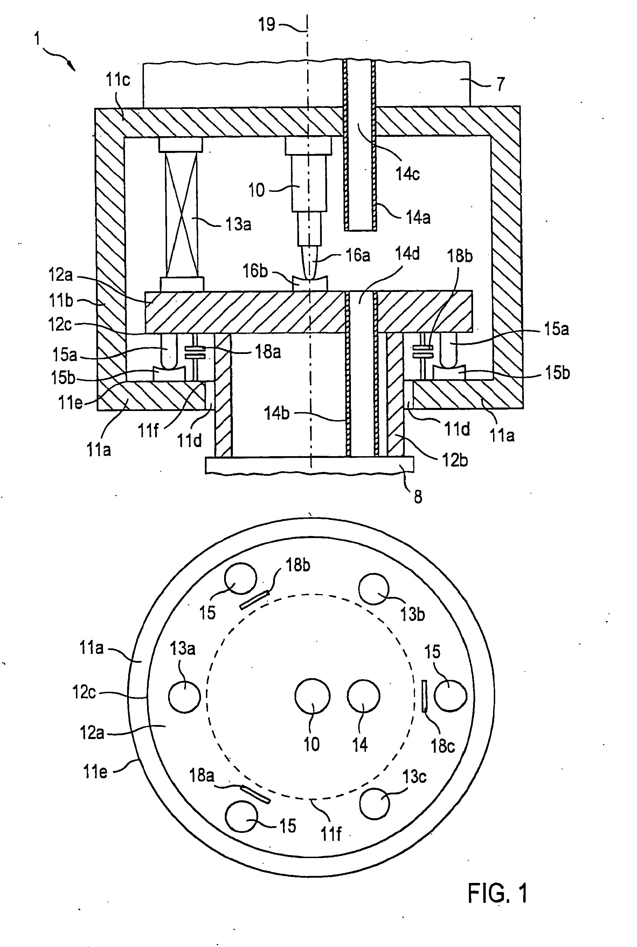

Fig. 1 zeigt oben schematisch geschnitten eine Seitenansicht des Verbindungsstücks 1 und unten schematisch eine Draufsicht auf die Anordnung relevanter Komponenten. Das maschinenseitige Auflager 11 kann eine maschinenseitige Platte 11c haben, die an maschinenseitigen (rahmenseitigen) Komponenten der Maschine, etwa einem Gestänge oder einem Aktor 7, befestigt werden kann. Gegenüber der Auflagerplatte 11c kann ein Auflagerbereich 11a liegen, der als Platte mit einem mittigen Loch 11d darin ausgebildet sein kann. Über Verbindungsbereiche 11b können die Komponenten 11a und 11c miteinander verbunden sein. Das maschinenseitige Auflager 11 kann (abgesehen von der Öffnung lld) als geschlossenes Gehäuse ausgebildet sein. Ein werkzeugseitiger Halter 12 kann eine Halterplatte 12a und ein damit verbundenes Verbindungsrohr 12b aufweisen. Das Verbindungsrohr 12b kann die Öffnung 11d des Auflagerbereichs 11a durchdringen. Die Halterplatte 12a kann größer ausgebildet sein als die Öffnung 11d. Am freien Ende des Rohrs 12b können werkzeugkopfseitige Komponenten befestigt sein, etwa ein oder mehrere Aktoren 8.

Auflager 11 und Halter 12 sind nicht fest, sondern elastisch miteinander verbunden. Eine Positionierungseinrichtung 15 kann dafür sorgen, dass bei Druck in eine Richtung (beispielsweise in Fig. 1 nach unten) das maschinenseitige Auflager 11 und der werkzeugseitige Halter 12 in eine definierte Position zueinander gelangen. Die Positioniereinrichtungen 15 können mehrfach vorgesehen sein und können bereichsweise formschlüssige Einzelteile haben, beispielsweise einen konvexen halterseitigen Abschnitt 15a und einen dementsprechend konkaven auflagerseitigen Abschnitt 15b. Zwei solcher Positioniereinrichtungen 15 können vorgesehen sein. Eine dritte Positioniereinrichtung kann vorgesehen sein, um eine Dreipunktauflage sicherzustellen. Die Positioniereinrichtungen 15 können um die Öffnung 11d herum verteilt sein, beispielweise regelmäßig alle 120 °.

10 bezeichnet eine Drückvorrichtung, die den Halter 12 elastisch in eine definierte Position gegen das Auflager 11 drückt. Die Drückvorrichtung ist in ihrer Druckkraft während des Maschinenbetriebs veränderlich. Sie ist automatisch veränderlich, ohne dass hierzu manueller Eingriff einer Bedienperson erforderlich wäre. Die Veränderung kann vergleichsweise schnell erfolgen, beispielsweise in einem Zeitraum von weniger als einer Sekunde, vorzugsweise weniger als 0,5 Sekunden.

Die Drückvorrichtung 10 kann eine pneumatische Drückvorrichtung sein und/oder eine hydraulische und/oder eine federelastische und/oder eine elektromagnetische Drückvorrichtung. Vorzugsweise handelt es sich um eine pneumatische Einrichtung, etwa einen pneumatisch betriebenen Zylinder, der unter Gasdruck den Halter 12 gegen das Auflager 11 drückt. Durch Einstellen des Gasdrucks kann die Druckkraft automatisch eingestellt werden. Durch die Kompresssibilität des Gases ist die Elastizität der Drückvorrichtung 10 und damit des Verbindungsstücks 1 gewährleistet. Es kann aber auch eine elektromagnetische Einrichtung vorgesehen sein, die mittels eines Elektromagneten eine Druckkraft in gewünschter Weise erzeugt. Auch Elektromagneten sind nicht starr, so dass bei Kollisionen gegebenenfalls die elektromagnetisch erzeugte Kraft überwunden werden kann, so dass Systemelastizität gegeben ist.

Die Verbindung zwischen Drückvorrichtung 10 und werkzeugseitigem Halter 12 und/oder maschinenseitigem Auflager 11 muss nicht fest/starr sein, sondern kann auch lediglich in eine Richtung kraftschlüssig sein. Auch hier können in gewisser Weise formschlüssige Kraftübertragungsbereiche 16a, b ähnlich den Komponenten 15 vorgesehen sein.

Im Betrieb drückt die Drückvorrichtung 10 den Halter 12 gegen das Auflager 11 in die definierte Position. Dann hat auch das Werkzeug, das mittelbar oder unmittelbar am Halter 12 befestigt ist, die von der Steuerung angenommene Position. Die Druckkraft ist so einstellbar, dass die betriebsüblichen Kräfte (Trägheitskräfte, Reaktionskräfte, Gewichtskraft, Momentenkräfte,...) aufgefangen werden können und insbesondere nicht zu einem Ausrücken des Halters 12 aus der definierten Position gegenüber dem Auflager 11 führen. Allerdings ist die Druckkraft der Drückvorrichtung 10 einstellbar. Sie kann so eingestellt werden, dass die jeweils ausgeübte Druckkraft eine definierte und eventuell in etwa konstante Kraftreserve vor dem Ausrücken des Halters aus der definierten Position erzeugt. Wie in der Figur 1 gezeigt, kann die Drückvorrichtung 10 zwischen der Auflagerplatte 11c und der Halterplatte 12a in der Weise drückend wirken, dass die Halterplatte logisch betrachtet weg vom Maschinenrahmen hin zum Werkzeug und auf den Auflagerbereich 11a zu gedrückt werden. Ein Ausrücken aus der definierten Position, etwa bei Kollision, erfolgt dann logisch betrachtet durch Bewegung der Halterplatte 12a auf den Maschinenrahmen zu.

Zusätzlich zur Drückvorrichtung 10 können eine oder mehrere herkömmliche Spannvorrichtungen 13 vorgesehen sein. Es kann sich hier beispielsweise um Druckfedern handeln, die funktional wie die Drückvorrichtung 10 den Halter in eine definierte Position gegenüber dem Auflager drücken. Diese herkömmlichen Spannvorrichtungen sind allerdings nicht während des Betriebs bzw. automatisch ohne manuellen Eingriff in ihrer Kraft einstellbar. Sie können jedoch insgesamt so eingestellt werden, dass sie eine Mindestdruckkraft erzeugen, die in jedem Fall gewünscht ist. Die Drückvorrichtung 10 kann darüber hinaus einen variablen Anteil erzeugen, der in Abhängigkeit von bestimmten Parametern erzeugt wird.

Das Werkzeug kann ein Laserkopf sein. Dementsprechend kann das Verbindungsstück 1 eine Laserstrahldurchführung 14 aufweisen. Es kann sich hier letztlich um fluchtende Öffnungen 14c, 14d und/oder um Rohrstücke 14a, 14b handeln, die den Durchlauf eines Laserstrahls durch das Verbindungsstück 1 gestatten, insbesondere durch Teile des Auflagers 11 und/oder des Haltes 12. Ein Lichtwellenleiter kann, muss aber nicht vorgesehen sein.

Die schematische Draufsicht in Fig. 1 unten zeigt die Anordnung der einzelnen Komponenten in einer bestimmten Ausführungsform. Der äußere Kreis 11e bezeichnet die äußere Begrenzung des Auflagerbereichs 11a. 11f ist der Rand der Öffnung 11d. 12c ist der äußere Rand der Platte 12a. Die Positioniereinrichtungen 15 können sich zwischen Rand 12c der Platte 12a und Rand 11f des Lochs 11d befinden. Es können drei von ihnen vorzugsweise regelmäßig über den Kreisumfang beabstandet vorgesehen sein. Sie können, müssen aber nicht identisch aufgebaut sein. Sie können so aufgebaut sein, dass sie zu einer definierten Lage führen, wenn die Druckkraft in ausreichender Höhe ausgeübt wird, ohne dabei zu Überbestimmungen in der Positionsdefinition zu führen.

Die herkömmlichen Spannvorrichtungen 13 können auch mehrfach vorgesehen sein. Es können beispielsweise drei von ihnen ausgebildet sein, die ebenfalls regelmäßig über den Kreisumfang verteilt sein können. Die Drückvorrichtung 10 kann mittig und einfach vorgesehen sein. 14 bezeichnet schematisch die Durchführung für den Laserstrahl. Sie kann in eine Öffnung des Rohrs 12b führen.

Anders als gezeigt kann auch die Drückvorrichtung 10 aus mehreren einzelnen Drückeinrichtungen bestehen, beispielsweise aus mehreren hydraulischen oder pneumatischen oder elektromagnetischen Einheiten, die auch regelmäßig verteilt sein können. Die konventionelle Spannvorrichtung 13 kann anders als gezeigt auch nur einfach vorgesehen sein und gegebenenfalls auch symmetrisch mittig bezüglich der Achse 19 angeordnet sein.

Andersherum als schematisch gezeigt können der werkzeugseitige Halter 12 als mehr oder minder geschlossenes Gehäuse und das maschinenseitige Auflager 11 als eine aus dem Gehäuse herausragende Komponente ausgebildet sein. Auch können sowohl Auflager 11 als auch Halter 12 als vergleichsweise offene Strukturen ausgebildet sein.

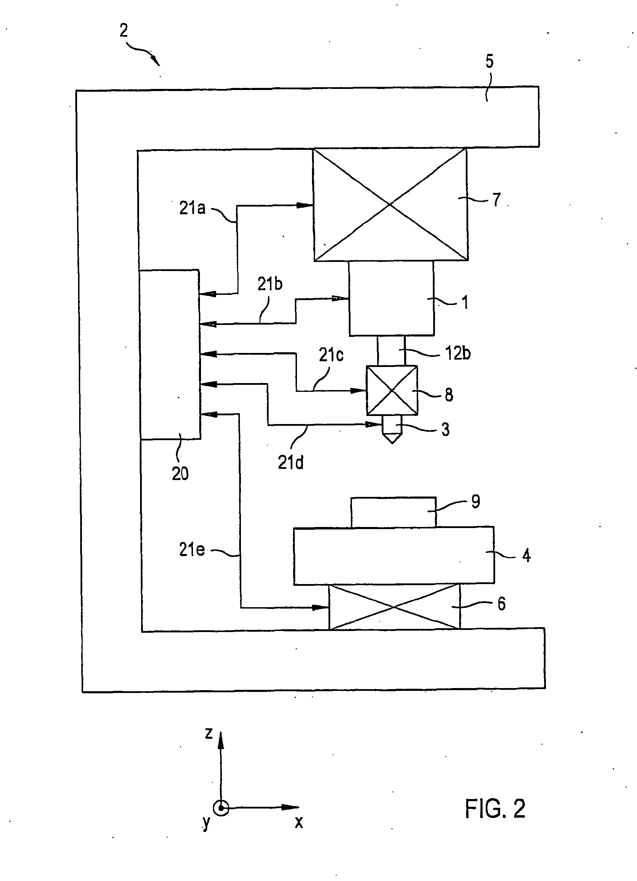

Fig. 2 zeigt schematisch eine Mehrachsbearbeitungsmaschine 2. Sie erlaubt die relative Verstellung von Werkzeug 3 und Werkstück 9 die gegeneinander längs mehrerer bzw. um mehrere Achsen verstellbar sind. Insbesondere können drei translatorische und zwei rotatorische Achsen vorgesehen sein.

Die Verstellbarkeit kann durch Aktoren 6 bewirkt werden, die sich zwischen Werkstücktisch 4 und Maschinenrahmen 5 befinden und/oder durch Aktoren 7 zwischen Maschinenrahmen 5 und Verbindungsstück 1 und/oder durch Aktoren 8 zwischen Verbindungsstück 1 und Werkzeug 3. Die Gestaltung kann insbesondere so sein, dass ein oder zwei rotatorische Aktoren zwischen Verbindungsstück 1 und Werkzeug 3 vorgesehen sind, während die übrigen Aktoren auf der anderen Seite des Verbindungsstücks 1 vorgesehen sind.

Es ist eine Steuerung 20 vorgesehen, die die verschiedensten Maschinenfunktionen steuert, und dabei insbesondere auch die Drückvorrichtung 10 in ihrer Drückkraft. Es kann sich um eine pneumatische Steuerung handeln, die den Gasdruck in einem Gaszylinder steuert, oder es kann sich um eine Elektromagnetsteuerung handeln, die den Stromfluss durch einen Elektromagneten steuert. Die Steuerung 20 kann verschiedene Sensorsignale empfangen. Sie kann die Drückvorrichtung nach Maßgabe von Sensorsignalen und/oder nach Maßgabe von intern bekannten Parametern (beispielsweise Lage des Werkstücks, Lage des Werkzeugs, Geschwindigkeit oder Beschleunigung des Werkzeugs durch die Aktoren, Arbeitsmodus) steuern. Auf diese Weise kann die Steuerung 20 die Druckkraft im Verbindungsstück 1 schnell und in Abhängigkeit von den jeweils betrachteten und gewünschten Parametern einstellen.

Im Verbindungsstück 1 können ein oder mehrere Ausrücksensoren 18 vorgesehen sein, die das Ausrücken von Halter und Auflager aus der definierten Relativposition zueinander erfassen. Es können mehrere, z. B. drei Ausrücksensoren 18a-c vorzugsweise regelmäßig über den Umfang der Halterplatte verteilt vorgesehen sein. Sie können ein qualitatives oder auch quantitatives Maß über die Größe der Ausrückung erzeugen. Sie können bspw. kapazitiv aufgebaut sein und über die Änderung des Abstandes zweier als Kapazität dienender Platten eine elektrisch auswertbare Größe erzeugen. Die Steuerung kann dann beispielsweise die Druckkraft der Drückvorrichtung 10 auch nach Maßgabe dieser Ausrücksensoren 18 steuern, etwa insbesondere so, dass die Druckkraft minimal (Null) wird, wenn ein Ausrücken erfasst wird. Es kann auch ein Maschinen-Not-Aus nach Maßgabe der Signale von den Ausrücksensoren erzeugt werden. Der Ausrücksensor 18 kann im Verbindungsstück 1 vorgesehen sein. Er kann aber auch als Kollisionsdetektor ausgebildet sein, der an einer geeigneten Stelle der Maschine 5 vorgesehen ist.

Das Verbindungsstück 1 weist die (nicht gezeigten) erforderlichen Anschlüsse auf, insbesondere, je nach Bedarf, Anschlüsse für elektrische Signale oder elektrische Leistung, Pneumatik, Hydraulik oder Ähnliches. Die Maschine kann, je nach Drückvorrichtung 10, geeignete Pneumatikquellen oder Hydraulikquellen (Pumpen) aufweisen.

Die Druckkraft der Drückvorrichtung 10 im Verbindungsstück 1 kann Teil der Programmierung sein und dann fest vorgegeben sein. Sie kann aber andererseits auch jeweils ad hoc aus den jeweils zu betrachtenden Parametern (Werkzeuggewicht, Werkzeuglage, Geschwindigkeit, Beschleunigung, Betriebsphase, Betriebsmodus,...) berechnet werden. Für die Berechnung können geeignete Algorithmen vorgegeben sein oder eingegeben werden, anhand derer dann die jeweilige Druckkraft berechnet wird. Neben statischen Erwägungen können hier auch dynamische Effekte berücksichtigt werden. Die Arbeitsweise kann auch so sein, dass bei der Programmierung die jeweiligen Druckkräfte algorithmisch berechnet und dann als Teil des Programms abgelegt werden.

## Patentansprüche

1. Mehrachsbearbeitungsmaschine (2) mit einem Maschinenrahmen (5),
einem gegenüber dem Maschinenrahmen längs mehrerer oder um mehrere Achsen verstellbaren Werkzeug (3),
Aktoren (6, 7, 8) zum Bewirken einer Verstellung längs der oder um die Achsen,
einer Steuerung (20) zum Steuern der Aktoren, einem Verbindungsstück (10) zur Verbindung eines Werkzeugs mit der Maschine, wobei das Verbindungsstück (1) ein maschinenseitiges Auflager (11) aufweist, einen werkzeugseitigen Halter (12), und eine Drückvorrichtung (10), die den Halter elastisch in eine definierte Position gegen das Auflager drückt,
**dadurch gekennzeichnet, dass**
die Drückvorrichtung (10) in ihrer Drückkraft während des Maschinenbetriebs veränderlich ist und die Steuerung (20, 21b) der Maschine zur Ansteuerung der Drückvorrichtung (10) des Verbindungsstücks (1) während des Maschinenbetriebs ausgelegt ist.

2. Maschine nach Anspruch 1, bei der das Verbindungsstück (1) eine Spannvorrichtung (13) aufweist, die den Halter mit einer voreingestellten Kraft elastisch in die definierte Position gegen das Auflager drückt.

3. Maschine nach Anspruch 1 oder 2, **dadurch gekennzeichnet, dass** die Drückvorrichtung (10) eine pneumatisch und/oder hydraulische und/oder federelastische und/oder elektromagnetische Einrichtung aufweist.

4. Maschine nach einem oder mehreren der vorherigen Ansprüche, **dadurch gekennzeichnet, dass** die Drückvorrichtung (10) den Halter in Richtung einer Achse des Halters auf das Auflager zu drückt.

5. Maschine nach Anspruch 4, **dadurch gekennzeichnet, dass** die Drückvorrichtung (10) mittig am Halter ansetzt.

6. Maschine nach einem oder mehreren der vorherigen Ansprüche, bei der das Verbindungsstück (1) eine Durchführung (14) für einen Laserstrahl aufweist.

7. Maschine nach einem oder mehreren der vorherigen Ansprüche, bei der das Verbindungsstück (1) eine Positioniereinrichtung (15) zum definierten Positionieren von Halter und Auflager relativ zueinander aufweist.

8. Maschine nach einem oder mehreren der vorherigen Ansprüche, bei der das Verbindungsstück (1) einen Anschluss aufweist, über den dem Verbindungsstück Steuerungssignale oder ein Medium für die Drückvorrichtung zugeführt werden kann.

9. Maschine nach einem oder mehreren der vorherigen Ansprüche, bei der das Verbindungsstück (1) einen oder mehrere Ausrücksensoren (18) aufweist, die das Ausrücken von Halter (12) und Auflager (11) aus der definierten Relativposition zueinander erfassen.

10. Maschine nach Anspruch 1, **dadurch gekennzeichnet, dass** die Steuerung dazu ausgelegt ist, die Drückkraft nach Maßgabe eines oder mehrerer der folgenden Parameter einzustellen:
- Arbeitsmodus der Maschine,
- Arbeitsschritt der Maschine,
- Verstellgeschwindigkeit,
- Beschleunigung des Werkzeugs,
- Lage des Werkzeugs.

11. Maschine nach Anspruch 1, **dadurch gekennzeichnet, dass** das Werkzeug einen Laserbearbeitungskopf aufweist.

12. Verfahren zur Steuerung der Elastizität der Verbindung eines Werkzeugs mit einer Mehrachsbearbeitungsmaschine, **gekennzeichnet durch** die Schritte
Vorsehen eines Verbindungsstücks, bei dem ein maschinenseitiges Auflager gegen einen werkzeugseitigen Halter automatisch **durch** eine einstellbare Drückvorrichtung während des Maschinenbetriebs automatisch einstellbar gedrückt wird,
Bestimmen einer Drückkraft für die Drückvorrichtung nach Maßgabe eines oder mehrerer Maschinen- oder Betriebsparameter der Mehrachsbearbeitungsmaschine während des Maschinenbetriebs, und
Einstellen der bestimmten Drückkraft im Verbindungsstück während des Maschinenbetriebs.

13. Verfahren nach Anspruch 12, **dadurch gekennzeichnet, dass** die Drückkraft vorab ermittelt und als Teil eines Bearbeitungsprogramms gespeichert wird.

14. Verfahren nach Anspruch 12, **dadurch gekennzeichnet, dass** die Drückkraft während des Maschinenbetriebs ermittelt wird.

## Claims

1. Multi-axis working machine (2) comprising a machine frame (5),
a tool (3) displaceable against the machine frame along or around plural axes,
actuators (6, 7, 8) for causing a displacement along or around said axes,
a control (20) for controlling the actuators,
a connecting piece (10) for connecting a tool with the machine, wherein the connecting piece (1) comprises a machine-side rest (11), a tool-side holder (12), and a pressing means (10) which elastically presses the holder into a defined position against the rest,
**characterized in that**
the pressing means (10) is adjustable in its pressing force during machine operation, and the control (20, 21b) of the machine is adapted to drive the pressing means (10) of the connecting piece (1) during machine operation.

2. Machine in accordance with claim 1, wherein the connecting piece (1) comprises an urging means (13) which elastically presses the holder with a pre-adjusted force into the defined position against the rest.

3. Machine according to claim 1 or 2, **characterized in that** the pressing means (10) comprises a pneumatic and/or hydraulic and/or spring-elastic and/or electromagnetic means.

4. Machine according to one of the previous claims, **characterized in that** the pressing means (10) presses the holder along the direction of an axis of the holder towards the rest.

5. Machine according to claim 4, **characterized in that** the pressing means (10) engages at the center of the holder.

6. Machine according to one of the previous claims, wherein the connecting piece (1) comprises a guide (14) for a laser beam.

7. Machine according to one of the previous claims, wherein the connecting piece (1) comprises a positioning means (15) for rendering a defined positioning of the holder and the rest relative to each other.

8. Machine according to one of the previous claims, wherein the connecting piece (1) comprises a connector for supplying control signals or a fluid for the pressing means to the connecting piece.

9. Machine according to one of the previous claims, wherein the connecting piece (1) comprises one or more sensors (18) for detecting a displacement of the holder (12) and the rest (11) out of the defined relative position against each other.

10. Machine according to claim 1, **characterized in that** the control is adapted to adjust the pressing force according to one or more of the following parameters:
- working mode of the machine,
- working steps of the machine,
- adjustment speed,
- acceleration of the tool,
- attitude of the tool.

11. Machine according to claim 1, **characterized in that** the tool comprises a laser working head.

12. Method for controlling the elasticity of a connection of a tool and a multi-axes working machine, **characterized by** the steps of
providing a connecting piece, in which a machine-side rest is automatically pressed against a tool-side holder by an adjustable pressing means in an automatically adjustable way during machine operation,
determining a pressing force for the pressing means in accordance with one or more machine or operation parameters of the multi-axes working machine during machine operation, and
setting the determined pressing force in the connecting piece during machine operation.

13. Method according to claim 12, **characterized in that** the pressing force is determined beforehand and stored as part of a machining program.

14. Method according to claim 12, **characterized in that** the pressing force is determined during machine operation.

## Revendications

1. Machine d'usinage multiaxe (2) comprenant un châssis (5), un outil (3) ajustable le long de plusieurs axes ou autour de plusieurs axes par rapport à la machine, des actionneurs (6, 7, 8) chargés d'effectuer l'ajustage le long ou autour des axes, un système de commande (20) pour le pilotage des actionneurs, une pièce de raccordement (1) permettant de raccorder un outil à la machine, la pièce de raccordement étant composée d'un appui (11) côté machine et d'un support (12) côté outil, et un dispositif de poussée (10) qui repousse élastiquement dans une position définie le support contre la surface d'appui,
**caractérisée en ce que**
la force de poussée du dispositif de poussée (10) peut être modifiée pendant que la machine fonctionne, et le système de commande (20, 21b) de la machine pilotant le dispositif de poussée (10) de la pièce de raccordement est réglé en cours de fonctionnement.

2. Machine selon la revendication 1, **caractérisée en ce que** la pièce de raccordement (1) présente un dispositif tenseur (13) qui repousse élastiquement dans une position définie le support contre la surface d'appui selon une force de poussée préprogrammée.

3. Machine selon les revendications 1 ou 2, **caractérisée en ce que** le dispositif de poussée présente un dispositif pneumatique et/ou hydraulique et/ou élastique et/ou électromagnétique.

4. Machine telle que revendiquée dans une ou plusieurs des revendications précédentes, **caractérisée en ce que** le dispositif de poussée (10) repousse le support contre la surface d'appui dans un sens axial par rapport au support.

5. Machine selon la revendication 4, **caractérisée en ce que** le dispositif de poussée (10) exerce une poussée au centre du support.

6. Machine telle que revendiquée dans une ou plusieurs des revendications précédentes, **caractérisée en ce que** la pièce de raccordement (1) présente une ouverture (14) pour le passage d'un rayon laser.

7. Machine telle que revendiquée dans une ou plusieurs des revendications précédentes, **caractérisée en ce que** la pièce de raccordement (1) présente un dispositif de positionnement (15) permettant de définir la position relative du support et de la surface d'appui.

8. Machine telle que revendiquée dans une ou plusieurs des revendications précédentes, **caractérisée en ce que** la pièce de raccordement (1) présente une connexion permettant d'envoyer des signaux de commande ou un moyen de communication au dispositif de poussée.

9. Machine telle que revendiquée dans une ou plusieurs des revendications précédentes, **caractérisée en ce que** la pièce de raccordement (1) présente un ou plusieurs capteurs de déplacement (18) qui détectent le déplacement du support (12) et de l'appui (11) par rapport à leur position relative définie.

10. Machine selon la revendication 1, **caractérisée en ce que** le système de commande est programmé pour régler la force de poussée en fonction de l'un des paramètres suivantes :
- mode de travail de la machine
- étape de travail de la machine
- vitesse de réglage
- accélération de l'outil
- position de l'outil.

11. Machine selon la revendication 1, **caractérisée en ce que** l'outil est équipé d'une tête d'usinage laser.

12. Procédé de commande de l'élasticité du raccordement d'un outil avec une machine d'usinage multiaxe, **caractérisé par**
la présence d'une pièce de raccordement, ladite pièce de raccordement comprenant un appui côté machine poussant automatiquement contre un support côté outil par le biais d'un dispositif de poussée réglable pendant que la machine fonctionne, et
la définition d'une force de poussée pour le dispositif de poussée en fonction d'un ou de plusieurs paramètres de machine ou paramètres de fonctionnement de la machine d'usinage multiaxe pendant que la machine fonctionne, et
le réglage de la force de poussée définie dans la pièce de raccordement pendant que la machine fonctionne.

13. Procédé selon la revendication 12, **caractérisé en ce que** la force de poussée est déterminée au préalable et enregistrée comme élément du programme d'usinage.

14. Procédé selon la revendication 12, **caractérisé en ce que** la force de poussée est définie pendant que la machine fonctionne.
